(19) Europäisches Patentamt
European Patent Office
Office européen des brevets

(11) Veröffentlichungsnummer: **0 133 162**
**A2**

(12) # EUROPÄISCHE PATENTANMELDUNG

(21) Anmeldenummer: 84810350.3

(22) Anmeldetag: 16.07.84

(51) Int. Cl.[4]: C 07 F 9/53
C 07 F 9/58, A 01 N 57/18

(30) Priorität: 20.07.83 CH 3989/83

(43) Veröffentlichungstag der Anmeldung: 13.02.85 Patentblatt 85/7

(84) Benannte Vertragsstaaten: BE CH DE FR GB IT LI

(71) Anmelder: CIBA-GEIGY AG
Postfach
CH-4002 Basel(CH)

(72) Erfinder: Maier, Ludwig, Dr.
Im Lee 28
CH-4144 Arlesheim(CH)

(54) **Phosphonoxid-Derivate und ihre Verwendung als Herbizide und pflanzenwuchsregulierende Mittel.**

(57) (2-Nitro-5-aryloxy-phenylamino)- alkylphosphinoxid -Derivate der Formel I

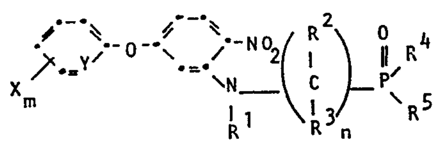

(I)

worin

X Halogen, $CF_3$, $NO_2$, CN, $CONH_2$ oder $CSNH_2$,

Y Stickstoff oder -CH=,

$R^1$ Wasserstoff, $C_1$-$C_4$-Alkyl oder Aralkyl mit 1-4 Kohlenstoffatomen im Alkylteil,

$R^2$ Wasserstoff oder $C_1$-$C_4$-Alkyl,

$R^3$ Wasserstoff, $C_1$-$C_4$-Alkyl, Phenyl, Benzyl oder $C_1$-$C_4$-Alkylbenzyl,

$R^4$ und $R^5$ unabhängig voneinander $C_1$-$C_4$-Alkyl, $C_1$-$C_4$-Halogenalkyl, $C_2$-$C_6$-Alkoxyalkyl oder Aralkyl mit 1-4 Kohlenstoffatomen im Alkylteil,

m eine Zahl von Null bis drei und

n eine Zahl von eins bis drei bedeuten, haben nützliche herbizide Eigenschaften.

CIBA-GEIGY AG
Basel (Schweiz)

5-14509 /=

Herbizide und pflanzenwuchsregulierende Mittel

Die vorliegende Erfindung betrifft (2-Nitro-5-aryloxy-phenylamino)-alkylphosphinoxid Derivate, Verfahren zu ihrer Herstellung, sie enthaltende herbizide und pflanzenwuchsregulierende Mittel sowie die Verwendung dieser Verbindungen oder sie enthaltender Mittel zur Bekämpfung von unerwünschtem Pflanzenwuchs und zur Beeinflussung des Pflanzenwuchses.

Die neuen Verbindungen gemäss vorliegender Erfindung entsprechen der Formel I

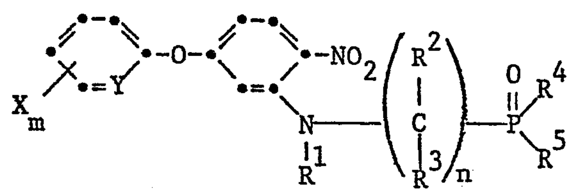

(I)

worin

X Halogen, $CF_3$, $NO_2$, CN, $CONH_2$ oder $CSNH_2$,

Y Stickstoff oder -CH=,

$R^1$ Wasserstoff, $C_1$-$C_4$-Alkyl oder Aralkyl mit 1-4 Kohlenstoffatomen im Alkylteil,

$R^2$ Wasserstoff oder $C_1$-$C_4$-Alkyl,

$R^3$ Wasserstoff, $C_1$-$C_4$-Alkyl, Phenyl, Benzyl oder $C_1$-$C_4$-Alkylbenzyl,

$R^4$ und $R^5$ unabhängig voneinander $C_1$-$C_4$-Alkyl, $C_1$-$C_4$-Halogenalkyl, $C_2$-$C_6$-Alkoxyalkyl oder Aralkyl mit 1-4 Kohlenstoffatomen im Alkylteil,

m eine Zahl von Null bis drei und

n eine Zahl von eins bis drei bedeuten.

In der Definition der Formel I steht Alkyl in der Regel für Methyl, Aethyl, n-Propyl, i-Propyl, sowie die isomeren Butylreste. Alkyl ist dabei auch als Teil eines anderen Restes wie z.B. Aralkyl, Halogenalkyl oder Alkoxy zu verstehen.

Halogen steht im allgemeinen für Fluor, Chlor, Brom oder Jod. Bevorzugt sind Fluor und insbesondere Chlor.

Beispiele für definitionsgemässe Aralkylreste sind im allgemeinen Phenylalkyl wie Benzyl, 2-Phenyläthyl, 3-Phenylpropyl, 1-Phenyläthyl, 2-Phenylpropyl, 1-Phenylpropyl. Bevorzugt ist Benzyl.

Phenyl und Aralkylreste sind unsubstituiert oder substituiert durch niedere Alkylreste, Halogen, Cyan, Nitro oder niedere Alkoxyreste. Bevorzugt sind unsubstituierte Phenyl oder Aralkylreste.

Die Alkyl- und Alkoxyteile in Alkoxyalkylgruppen enthalten jeweils höchstens 4 Kohlenstoffatome. Bevorzugte Alkoxyalkylreste enthalten in der Regel insgesamt 2 bis 4 Kohlenstoffatome. Solche Reste sind Methoxymethyl, Methoxyäthyl, Methoxypropyl, Aethoxymethyl, Aethoxyäthyl oder Propyloxymethyl.

Entsprechend steht Halogenalkyl in der Regel für Chlormethyl, Dichlormethyl, Trichlormethyl, 2-Chloräthyl, 1,1,2,2-Tetrachloräthyl, Perchloräthyl, Fluormethyl, Difluormethyl, Trifluormethyl, 2,2,2-Trifluoräthyl, 1,1,2,2-Tetrafluoräthyl und Perfluoräthyl.

Das Symbol n steht vorzugsweise für die Zahl eins. Falls n für die Zahlen zwei oder drei steht, so haben die verschiedenen Reste $R^2$ und $R^3$ unabhängig voneinander die für $R^2$ und $R^3$ gegebenen Bedeutungen.

Bevorzugt sind diejenigen Verbindungen der Formel I, in denen entweder

a) m die Zahl zwei oder

b) X Trifluormethyl oder Chlor oder

c) $R^1$ Wasserstoff oder

d) $R^4$ $C_1$-$C_4$-Alkyl oder

e) $R^5$ $C_1$-$C_4$-Alkyl bedeuten.

Eine weitere Bevorzugung geniessen die Verbindungen der Formel 1, in denen Y die -CH= Gruppe und m die Zahl zwei bedeuten und die beiden Reste X für Chlor in 2-Stellung und Trifluormethyl in 4-Stellung stehen, $R^1$ Wasserstoff, $R^4$ und $R^5$ unabhängig voneinander $C_1$-$C_4$-Alkyl bedeuten.

Eine ebensolche Bevorzugung geniessen die Verbindungen der Formel I, in denen Y Stickstoff bedeutet, der Pyridinring in 2-Stellung veräthert ist, m die Zahl eins und X Trifluormethyl in 5-Stellung bedeuten, $R^1$ für Wasserstoff, $R^4$ und $R^5$ unabhängig voneinander für $C_1$-$C_4$-Alkyl stehen.

Besonders bevorzugt sind die Verbindungen der folgenden Unterformeln

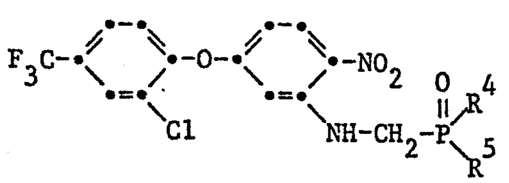

(Ia)

worin $R^4$ und $R^5$ unabhängig voneinander Methyl oder Aethyl bedeuten;

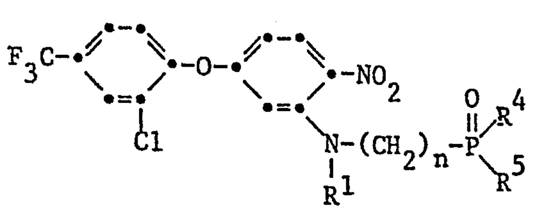

(Ib)

worin $R^1$ Wasserstoff, Methyl, Aethyl, Propyl oder Benzyl, $R^4$ und $R^5$ unabhängig voneinander $C_1$-$C_4$-Alkyl und n eine Zahl von 1 bis bedeuten;

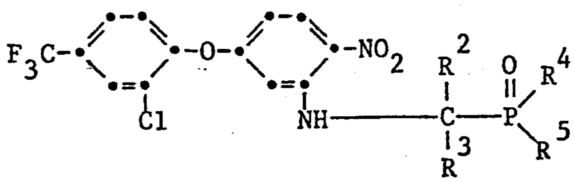

(Ic)

worin $R^2$ Methyl, $R^3$ Wasserstoff oder Methyl, $R^4$ und $R^5$ unabhängig voneinander Methyl oder Aethyl bedeuten.

Als bevorzugte Einzelverbindungen sind zu nennen:

N-[2-Nitro-5-(2-chlor-4-trifluormethylphenoxy)-phenyl]-P,P-dimethyl-aminomethylphosphinoxid,

N-[2-Nitro-5-(5-trifluormethyl-2-pyridyloxy)-phenyl]-P,P-dimethyl-aminomethylphosphinoxid,

N-[2-Nitro-5-(3,5-dichlor-2-pyridyloxy)-phenyl]-P,P-dimethyl-amino-methylphosphinoxid,

N-[2-Nitro-5-(2-chlor-4-trifluormethylphenoxy)-phenyl]-P,P-diäthyl-aminomethylphosphinoxid,

N-[2-Nitro-5-(2-chlor4-trifluormethylphenoxy)-phenyl]-P,P-dimethyl-1-aminobutylphosphinoxid,

N-[2-Nitro-5-(2-chlor-4-trifluormethylphenoxy)-phenyl]-P,P-dimethyl-1-aminoäthylphosphinoxid,

N-[2-Nitro-5-(3-chlor-5-trifluormethyl-2-pyridyloxy)-phenyl]-P,P-dimethyl-1-aminoäthylphosphinoxid und

N-[2-Nitro-5-(2-chlor-4-trifluormethylphenoxy)-phenyl]-P,P-dimethyl-1-amino-2-(3-methylphenyl)-äthyl phosphinoxid.

Die Verbindungen der Formel I werden hergestellt, indem man einen Dinitrophenylaryläther der Formel II

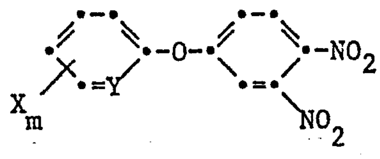

(II)

worin X, Y und m die unter Formel I gegebene Bedeutung haben, mit einem Aminoalkylphosphinoxid-Derivat der Formel III

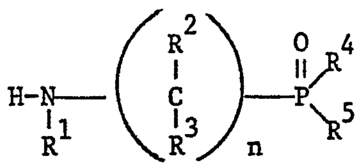

(III)

worin $R^1$, $R^2$, $R^3$, $R^4$, $R^5$ und n die unter Formel I gegebene Bedeutung haben, umsetzt.

Die Umsetzung zu Verbindungen der Formel I wird mit Vorteil in einem aprotischen, inerten organischen Lösungsmittel bei Temperaturen von 50-150°C, vorzugsweise 70-120°C durchgeführt.

Geeignete Lösungsmittel sind Kohlenwasserstoffe wie Benzol, Toluol, Xylol, Cyclohexan; Aether wie Aethylenglykoldimethyläther, Diäthylenglykoldimethyläther, Tetrahydrofuran, Dioxan; Nitrile wie Acetonitril, Propionitril; und Dimethylsulfoxid.

Die Ausgangsverbindungen der Formeln II und III sind aus der europäischen Patentschrift 7471 bzw. aus G.M. Kosolapoff und L. Maier, Organic Phosphorus Compounds, Wiley & Sons, New York, Vol. 3 (1976) bekannt oder können analog zu den dort angegebenen Methoden hergestellt werden. So wird beispielsweise eine neue Verbindung der Formel III, P,P-Dimethyl-aminomethylphosphinoxid, nach einem solchen Analogieverfahren erhalten.

Die erfindungsgemässen Endprodukte der Formel I zeigen bei pre- und postemergenter Anwendung auf Unkräuter eine hervorragende herbizide

Wirkung. Kulturpflanzen werden nur in geringem Masse oder bei höheren Aufwandmengen in ihrem Wachstum beeinflusst. Die Verbindungen der Formel I eignen sich daher in besonderer Weise zur selektiven Unkrautbekämpfung in Nutzpflanzenkulturen wie Mais, Soja, Baumwolle, Reis und Getreide wie Weizen, Gerste, Roggen und Hafer.

Darüberhinaus eignen sich die Wirkstoffe der Formel I in besonderem Masse zur Regulation des Pflanzenwachstums.

Insbesondere werden durch die Wirkstoffe der Formel I das Wurzelwachstum in Getreide sowie die Keimung der Pflanzensamen gefördert.

Einige der erfindungsgemässen Wirkstoffe, hemmen das Wachstum einiger dikotyler Pflanzen, wie z.B. von Bodenbedecker-Leguminosen.

Die Erfindung betrifft somit auch herbizide und pflanzenwuchsregulierende Mittel, welche einen neuen Wirkstoff der Formel I enthalten, sowie Verfahren zur pre- und postemergenten Unkrautbekämpfung und zur Wuchsregulation.

Die Verbindungen der Formel I werden in unveränderter Form oder vorzugsweise als Mittel zusammen mit den in der Formulierungstechnik üblichen Hilfsmittel eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und gegebenenfalls einen festen oder flüssigen Zusatzstoff enthaltenden Mittel,

Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substitierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäuren, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eine p-Nonylphenol-(4-14)-Aethylenoxid-Adduktes oder Phospholipide in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substitutenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ridgewood, New Jersey, 1981;
H. Stache, "Tensid-Taschenbuch", 2. Aufl., C. Hanser Verlag, München, Wien, 1981;
M. and J. Ash. "Encyclopedia of Surfactants", Vol. I-III, Chemical Publishing Co., New York, 1980-1981.

Die pestiziden Zubereitungen enthalten in der Regel 0,1 bis 99 %, insbesondere 0,1 bis 95 %, Wirkstoff der Formel I, 1 bis 99 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

<u>Lösungen</u>

| | |
|---|---|
| Aktiver Wirkstoff: | 5 bis 95 %, vorzugsweise 10 bis 80 % |
| Lösungsmittel: | 95 bis 5 %, vorzugsweise 90 bis 0 % |
| oberflächenaktives Mittel: | 1 bis 30 %, vorzugsweise 2 bis 20 %. |

<u>Emulgierbare Konzentrate:</u>

| | |
|---|---|
| Aktiver Wirkstoff: | 10 bis 50 %, bevorzugt 10 bis 40 % |
| oberflächenaktives Mittel: | 5 bis 30 %, vorzugsweise 10 bis 20 % |
| flüssiges Trägermittel: | 20 bis 95 %, vorzugsweise 40 bis 80 %. |

<u>Stäube</u>

| | |
|---|---|
| Aktiver Wirkstoff: | 0,5 bis 10 %, vorzugsweise 2 bis 8 % |
| festes Trägermittel: | 99,5 bis 90 %, vorzugsweise 98 bis 92 %. |

<u>Suspensions-Konzentrate</u>

| | |
|---|---|
| Aktiver Wirkstoff: | 5 bis 75 %, vorzugsweise 10 bis 50 % |
| Wasser: | 94 bis 25 %, vorzugsweise 90 bis 30 % |
| oberflächenaktives Mittel: | 1 bis 40 %, vorzugsweise 2 bis 30 %. |

Benetzbare Pulver

| | |
|---|---|
| Aktiver Wirkstoff: | 5 bis 90 %, vorzugsweise 10 bis 80 % und insbesondere 20 bis 60 % |
| oberflächenaktives Mittel: | 0,5 bis 20 %, vorzugsweise 1 bis 15 % |
| festes Trägermittel: | 5 bis 90 %, vorzugsweise 30 bis 70 %. |

Granulate

| | |
|---|---|
| Aktiver Wirkstoff: | 0,5 bis 30 %, vorzugsweise 3 bis 15 % |
| festes Trägermittel: | 99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,1 bis 10 kg AS/ha, vorzugsweise 0,25 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Die folgenden Beispiele dienen der näheren Erläuterung der vorliegenden Erfindung.

Herstellungsbeispiele:

Beispiel H1: N-[2-Nitro-5-(2-chlor-4-trifluormethylphenoxy)-phenyl]-P,P-dimethyl-aminomethylphosphinoxid (Verbindung Nr. 1.1).

Eine Lösung von 18,13 g 3',4'-Dinitro-2-chlor-4-trifluormethyl-diphenyläther in 50 ml Toluol wird zum Rückfluss erhitzt und tropfenweise mit 10,71 g geschmolzenem P,P-Dimethyl-aminomethylphosphinoxid versetzt.Dabei entstehen innerhalb der ersten halben Stunde

nitrose Gase. Die Lösung wird für weitere 2 Stunden zum Rückfluss erhitzt und anschliessend eingedampft. Der Rückstand wird mit Aethylacetat/Aethanol (4:1) an Kieselgel chromatographiert. Man erhält so 18,0 g (85% d.Th.) N-[2-Nitro-5-(2-chlor-4-trifluormethyl-phenoxy)-phenyl]-P,P-dimethyl-aminomethylphosphinoxid in Form gelber Kristalle, Smp. 166-168°C.

Analyse: $C_{16}H_{15}ClF_3N_2O_4P$ (422,73)

Berechnet C 45,46% H 3,58% N 6,63% F 13,48% Cl 8,39% P 7,33%

Gefunden C 45,5% H 3,6% N 6,9% F 13,4% Cl 8,3% P 7,5%.

Beispiel H2: N-[2-Nitro-5-(5-trifluormethyl-2-pyridyloxy)-phenyl]-P,P-dimethyl-aminomethylphosphinoxid (Verbindung Nr. 1.2).

Eine Lösung von 4,97 g (5-Trifluormethyl-2-pyridyloxy)-3,4-dinitrobenzol in 15 ml Toluol wird zum Rückfluss erhitzt und tropfenweise mit 3,21 g geschmolzenem P,P-Dimethyl-aminomethylphosphinoxid versetzt. Das Gemisch wird für weitere 2 Stunden am Rückfluss erhitzt, wobei anfangs nitrose Gase entwickelt werden. Anschliessend wird die braune Lösung eingedampft und der Rückstand aus 50 ml Aethylacetat umkristallisiert. Man erhält so 4,10 g (70% d.Th.) N-[2-Nitro-5-(5-trifluormethyl-2-pyridyloxy)-phenyl]-P,P-dimethyl-aminomethylphosphinoxid in Form gelber Kristalle, Smp. 158-160°C.

Analyse: $C_{15}H_{15}F_3N_3O_4P$ (389,27)

Berechnet C 46,28% H 3,89% N 10,80% F 14,64% P 7,96%

Gefunden C 46,0% H 3,8% N 10,8% F 14,6% P 8,0%.

Beispiel H3: N-[2-Nitro-5-(3,5-dichlor-2-pyridyloxy)-phenyl]-P,P-dimethyl-aminomethylphosphinoxid (Verbindung Nr. 1.3).

Eine Lösung von 4,95 g (3,5-Dichlor-2-pyridyloxy)-3,4-dinitrobenzol in 15 ml Toluol wird zum Rückfluss erhitzt und mit 3,21 g geschmolzenem P,P-Dimethyl-aminomethylphosphinoxid versetzt. Nach

Beendigung der anfänglichen Entwicklung nitroser Gase wird das Gemisch für weitere 2 Stunden zum Rückfluss erhitzt. Anschliessend wird die braune Lösung eingedampft und der Rückstand aus einem Gemisch von 20 ml Aethylacetat und 100 ml Aether umkristallisiert. Man erhält in Form gelber Kristalle 4,9 g (84% d.Th.) N-[2-Nitro-5-(3,5-dichlor-2-pyridyloxy)-phenyl]-P,P-dimethyl-aminomethylphosphinoxid, Smp. 153-155°C.

Analyse: $C_{14}H_{14}Cl_2N_3O_4P$ (390,16)

| | | | | | |
|---|---|---|---|---|---|
| Berechnet | C 43,10% | H 3,62% | N 10,77% | Cl 18,17% | P 7,94% |
| Gefunden | C 43,7% | H 3,6% | N 10,7% | Cl 17,8% | P 8,1%. |

**Beispiel H4:** P,P-Dimethyl-aminomethylphosphinoxid

a) N-Benzyl-P,P-dimethyl-aminomethylphosphinoxid.

Eine Lösung von 316,3 g Chlormethyl-dimethylphosphinoxid, 574 ml Benzylamin und 500 ml Aethanol wird für 18 Stunden zum Rückfluss erhitzt. Nach dem Abkühlen auf 20 bis 25°C wird die trübe Suspension filtriert. Das klare Filtrat wird eingedampft und der Rückstand mit 500 ml 10%iger Kochsalzlösung versetzt. Die wässrige Lösung wird 4 mal mit je 500 ml Methylenchlorid extrahiert. Die vereinigten organischen Phasen werden über Natriumsulphat getrocknet und eingedampft. Durch Vakuumdestillation des öligen Rohprodukts erhält man 311,0 g (63% d.Th.) N-Benzyl-P,P-dimethyl-aminomethylphosphinoxid als gelbstichiges Oel, Sdp. 150°C/0,2 mb.

Analyse $C_{10}H_{16}NOP$ (197,22)

| | | | | |
|---|---|---|---|---|
| Berechnet | C 60,90% | H 8,18% | N 7,10% | P 15,71% |
| Gefunden | C 59,83% | H 8,03% | N 7,01% | P 15,83% |

b) 148,0 g N-Benzyl-P,P-dimethyl-aminomethylphosphinoxid werden in 1,5 l Aethanol unter Zusatz von 45 g 5%igem Palladium/Kohle-Katalysator unter einer Wasserstoffatmosphäre hydriert. Nach der Aufnahme der berechneten Wasserstoffmenge wird der Katalysator abgetrennt und die hydrierte Lösung eingedampft. Durch Fraktionierung des öligen Rückstands im Vakuum erhält man 65,0 g (81% d.Th.) P,P-Dimethyl-aminomethylphosphinoxid als farbloses Oel, das bei längerem Stehen auskristallisiert und sehr hygroskopisch ist, Sdp. 89-90°C/0,05 mb.

Analyse $C_3H_{10}NOP$ (107,09)

| | | | | |
|---|---|---|---|---|
| Berechnet | C 33,65% | H 9,41% | N 13,08% | P 28,92% |
| Gefunden | C 33,26% | H 9,53% | N 12,89% | P 28,78% |

In analoger Weise erhält man die in der anschliessenden Tabelle aufgeführte Verbindungen.

Tabelle 1:

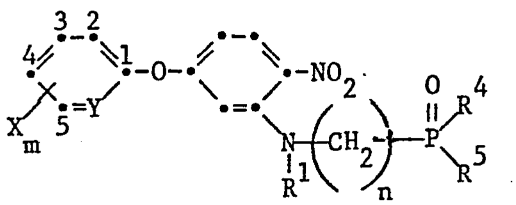

| Verb. Nr. | $X_m$ | Y | $R^1$ | $R^4$ | $R^5$ | n | physikalische Daten |
|---|---|---|---|---|---|---|---|
| 1.1 | 2-Cl, 4-$CF_3$ | CH | H | $CH_3$ | $CH_3$ | 1 | Smp.166-168°C |
| 1.2 | 4-$CF_3$ | N | H | $CH_3$ | $CH_3$ | 1 | Smp.158-160°C |
| 1.3 | 2-Cl, 4-Cl | N | H | $CH_3$ | $CH_3$ | 1 | Smp. 153-155°C |
| 1.4 | 2-Cl, 4-Cl | N | H | $C_2H_5$ | $C_2H_5$ | 1 | |
| 1.5 | 2-Cl, 4-$CF_3$ | N | H | $CH_3$ | $CH_3$ | 1 | |
| 1.6 | 2-Cl, 4-$CF_3$ | N | H | $C_2H_5$ | $C_2H_5$ | 1 | |
| 1.7 | 2-Cl, 4-$CF_3$ | N | H | $C_2H_7$-i | $C_3H_7$-i | 1 | |
| 1.8 | 2-Cl, 4-$CF_3$ | N | H | $CH_3$ | $C_3H_7$-i | 1 | |
| 1.9 | 2-Cl, 4-$CF_3$ | CH | H | $C_2H_5$ | $C_2H_5$ | 1 | Smp. 79-81°C |
| 1.10 | 2-Cl, 4-$CF_3$ | CH | H | $C_3H_7$-i | $C_3H_7$-i | 1 | |
| 1.11 | 2-Cl, 4-$CF_3$ | CH | H | $CH_3$ | $C_3H_7$-i | 1 | |
| 1.12 | 2-Cl, 6-Cl, 4-$CF_3$ | CH | H | $CH_3$ | $CH_3$ | 1 | |
| 1.13 | 2-Cl, 6-Cl, 4-$CF_3$ | CH | H | $C_2H_5$ | $C_2H_5$ | 1 | |
| 1.14 | 2-Cl, 4-Cl | N | H | $C_3H_7$-i | $C_3H_7$-i | 1 | |
| 1.15 | 2-Cl, 4-Cl | CH | H | $C_3H_7$-i | $C_3H_7$-i | 1 | |
| 1.16 | 2-Cl, 4-Cl | CH | H | $CH_3$ | $CH_3$ | 1 | |
| 1.17 | 2-Cl, 4-$CF_3$ | CH | H | $C_3H_7$-n | $C_3H_7$-n | 1 | |
| 1.18 | 2-Cl, 4-$CF_3$ | CH | H | $C_4H_9$-n | $C_4H_9$-n | 1 | |
| 1.19 | 2-Cl, 4-$CF_3$ | CH | $CH_3$ | $CH_3$ | $CH_3$ | 1 | |
| 1.20 | 2-Cl, 4-$CF_3$ | CH | $C_2H_5$ | $CH_3$ | $CH_3$ | 1 | |

Tabelle 1: (Fortsetzung)

| Verb. Nr. | $X_m$ | Y | $R^1$ | $R^4$ | $R^5$ | n | physikalische Daten |
|---|---|---|---|---|---|---|---|
| 1.21 | 2-Cl, 4-$CF_3$ | CH | $CH_2C_6H_5$ | $CH_3$ | $CH_3$ | 1 | |
| 1.22 | 2-Cl, 4-$CF_3$ | CH | $CH_2C_6H_5$ | $C_2H_5$ | $C_2H_5$ | 1 | |
| 1.23 | 2-Cl, 4-$CF_3$ | CH | H | $C_2H_5$ | $C_2H_5$ | 2 | |
| 1.24 | 2-Cl, 4-$CF_3$ | CH | H | $C_2H_5$ | $C_2H_5$ | 2 | |
| 1.25 | 2-Cl, 4-$CF_3$ | CH | H | $CH_3$ | $CH_3$ | 2 | |
| 1.26 | 2-Cl, 4-$CF_3$ | CH | H | $CH_3$ | $CH_3$ | 2 | |
| 1.27 | 2-Cl, 4-$CF_3$ | CH | $C_3H_7$-n | $CH_3$ | $CH_3$ | 1 | Harz |

Tabelle 2:

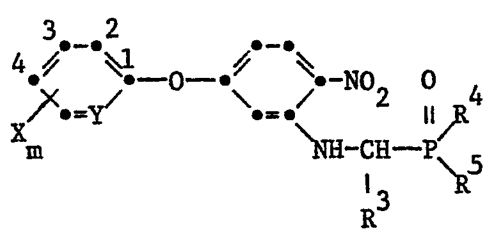

| Verb. Nr. | $X_m$ | Y | $R^3$ | $R^4$ | $R^5$ | physikalische Daten |
|---|---|---|---|---|---|---|
| 2.1 | 2-Cl, 4-$CF_3$ | CH | $CH_3$ | $CH_3$ | $CH_3$ | Smp.151-153°C |
| 2.2 | 2-Cl, 4-$CF_3$ | N | $CH_3$ | $CH_3$ | $CH_3$ | Smp.180-181°C |
| 2.3 | 2-Cl, 4-$CF_3$ | CH | $CH_3$ | $C_2H_5$ | $C_2H_5$ | |
| 2.4 | 2-Cl, 4-$CF_3$ | N | $CH_3$ | $C_2H_5$ | $C_2H_5$ | |
| 2.5 | 2-Cl, 4-$CF_3$ | CH | 3-$CH_3$-$C_6H_4$-$CH_2$- | $CH_3$ | $CH_3$ | Smp.161-165°C |
| 2.6 | 2-Cl, 4-$CF_3$ | N | 3-$CH_3$-$C_6H_4$-$CH_2$- | $CH_3$ | $CH_3$ | |

## Formulierungsbeispiele

### Beispiel F1:

Formulierungsbeispiele für flüssige Wirkstoffe der Formel I

(% = Gewichtsprozent)

| a) Emulsionskonzentrate | a) | b) | c) |
|---|---|---|---|
| Wirkstoff | 20% | 40% | 50% |
| Ca-Dodecylbenzolsulfonat | 5% | 8% | 5,8% |
| Ricinusöl-polyäthylenglykoläther (36 Mol AeO) | 5% | - | - |
| Tributylphenoyl-polyäthylenglykoläther (30 Mol AeO) | - | 12% | 4,2% |
| Cyclohexanon | - | 15% | 20% |
| Xylolgemisch | 70% | 25% | 20% |

Aus solchen Konzentraten können durch Verdünnen mit Wasser Emulsionen jeder gewünschten Konzentration hergestellt werden.

| b) Lösungen | a) | b) | c) | d) |
|---|---|---|---|---|
| Wirkstoff | 80% | 10% | 5% | 95% |
| Aethylenglykol-monomethyläther | 20% | - | - | - |
| Polyäthylenglykol MG 400 | - | 70% | - | - |
| N-Methyl-2-pyrrolidon | - | 20% | 1% | 5% |
| Epoxidiertes Kokosnussöl | - | - | 94% | - |

Die Lösungen sind zur Anwendung in Form kleinster Tropfen geeignet.

| c) Granulate | a) | b) |
|---|---|---|
| Wirkstoff | 5% | 10% |
| Kaolin | 94% | - |
| Hochdisperse Kieselsäure | 1% | - |
| Attapulgit | - | 90% |

Der Wirkstoff wird in Methylenchlorid gelöst, auf den Träger aufgesprüht und das Lösungsmittel anschliessend im Vakuum abgedampft.

| d) Stäubemittel | a) | b) |
|---|---|---|
| Wirkstoff | 2% | 5% |
| Hochdisperse Kieselsäure | 1% | 5% |
| Talkum | 97% | - |
| Kaolin | - | 90% |

Durch inniges Vermischen der Trägerstoffe mit dem Wirkstoff erhält man gebrauchsfertiges Stäubemittel.

Beispiel F2:

Formulierungsbeispiele für feste Wirkstoffe der Formel I (% = Gewichtsprozent)

| a) Spritzpulver | a) | b) |
|---|---|---|
| Wirkstoff | 20% | 60% |
| Na-Ligninsulfonat | 5% | 5% |
| Na-Laurylsulfat | 3% | 6% |
| Octylphenolpolyäthylenglykoläther (7-8 Mol AeO) | - | 2% |
| Hochdisperse Kieselsäure | 5% | 27% |
| Kaolin | 67% | - |

Der Wirkstoff wird mit den Zusatzstoffen gut vermischt und in einer geeigneten Mühle gut vermahlen. Man erhält Spritzpulver, die sich mit Wasser zur Suspension jeder gewünschten Konzentration verdünnen lassen.

| b) Emulsions-Konzentrat | |
|---|---|
| Wirkstoff | 10% |
| Octylphenolpolyäthylenglykoläther (4-5 Mol AeO) | 3% |
| Ca-Dodecylbenzolsulfonat | 3% |

| | |
|---|---|
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

| c) Stäubemittel | a) | b) |
|---|---|---|
| Wirkstoff | 5% | 8% |
| Talkum | 95% | - |
| Kaolin | - | 92% |

Man erhält anwendungsfertige Stäubemittel, indem der Wirkstoff mit dem Träger vermischt und auf einer geeigneten Mühle vermahlen wird.

| d) Extruder Granulat | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | |
|---|---|
| Wirkstoff | 3% |
| Polyäthylenglykol (MG 200) | 3% |
| Kaolin | 94% |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

f) Suspensions-Konzentrat

| | |
|---|---|
| Wirkstoff | 40% |
| Aethylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wässrige Formaldehyd-Lösung | 0,2% |
| Silikonöl in Form einer 75%igen wässrigen Emulsion | 0,8% |
| Wasser | 32% |

Der fein gemahlene Wirkstoff wird mit den Zusatzstoffen innig vermischt. Man erhält so ein Suspensions-Konzentrat, aus welchem durch Verdünnen mit Wasser Suspensions-Konzentrat, aus welchem durch Verdünnen mit Wasser Suspensionen jeder gewünschten Konzentration hergestellt werden können.

Biologische Beispiele

Beispiel B1: Nachweis der Herbizidwirkung vor dem Auflaufen der Pflanzen
Im Gewächshaus werden Pflanzensamen in Blumentöpfe von 12-15 cm Durchmesser gesät. Unmittelbar danach wird die Erdoberfläche mit einer wässrigen Dispersion oder Lösung der Wirkstoffe behandelt. Es werden Konzentrationen von 4 kg Wirkstoffmengen pro Hektar angewendet. Die Töpfe werden dann im Gewächshaus bei einer Temperatur von 22-25°C und 50-70 % relativer Luftfeuchtigkeit gehalten. Nach 3 Wochen wird der Versuch ausgewertet und die Wirkung auf die Versuchspflanzen nach dem folgenden Massstab bewertet:

1 : Pflanze nicht gekeimt oder total abgestorben
2-3: sehr starke Wirkung
4-6: mittlere Wirkung
7-8: schwache Wirkung
9 : keine Wirkung (wie unbehandelte Kontrolle).

Pre-emergente Wirkung

Aufwandmenge: 4 kg Wirksubstanz/Hektar

| Verb.Nr. | Avena | Setaria | Sinapis | Stellaria |
|---|---|---|---|---|
| 1.1 | 2 | 2 | 1 | 1 |
| 1.2 | 8 | 9 | 7 | 4 |
| 1.3 | 2 | 1 | 1 | 2 |
| 1.9 | 2 | 1 | 1 | 1 |
| 1.27 | 9 | 2 | 2 | 1 |
| 2.1 | 2 | 1 | 1 | 1 |

Beispiel B2: Nachweis der Herbizidwirkung nach dem Auflaufen der Pflanzen (Kontaktwirkung)

Eine Anzahl Unkräuter und Kulturpflanzen, sowohl monokotyle wie dikotyle, wurden nach dem Auflaufen, im 4- bis 6-Blattstadium mit einer wässrigen Wirkstoffdispersion in Dosierungen von 4 kg AS/ha gespritzt und dann bei 24° bis 26°C und 45-60 % relativer Luftfeuchtigkeit gehalten. 15 Tage nach der Behandlung wird der Versuch ausgewertet und nach dem gleichen Massstab wie im pre-emergenten Versuch bewertet.

Post-emergente Wirkung

Aufwandmenge: 4 kg Wirksubstanz/Hektar

| Verb. Nr. | Avena | Setaria | Lolium | Solanum | Sinapis | Stellaria | Phaseolus |
|---|---|---|---|---|---|---|---|
| 1 | 2 | 2 | 5 | 1 | 1 | 2 | 1 |
| 2 | 4 | 6 | 7 | 4 | 2 | 4 | 6 |
| 3 | 3 | 4 | 3 | 1 | 2 | 4 | 2 |
| 1.9 | 1 | 2 | 2 | 1 | 1 | 2 | 9 |
| 1.27 | 2 | 1 | 3 | 1 | 1 | 2 | 2 |
| 2.1 | 1 | 1 | 2 | 1 | 1 | 1 | 2 |

Patentansprüche für die Vertragsstaaten: BE, FR, DE, CH. LI, IT, GB

1. (2-Nitro-5-aryloxy-phenylamino)-alkylphosphinoxid-Derivate der Formel I

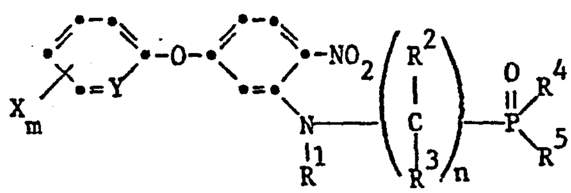

(I)

worin

X Halogen, $CF_3$, $NO_2$, CN, $CONH_2$ oder $CSNH_2$,

Y Stickstoff oder -CH=,

$R^1$ Wasserstoff, $C_1$-$C_4$-Alkyl oder Aralkyl mit 1-4 Kohlenstoffatomen im Alkylteil,

$R^2$ Wasserstoff oder $C_1$-$C_4$-Alkyl,

$R^3$ Wasserstoff, $C_1$-$C_4$-Alkyl , Phenyl, Benzyl oder $C_1$-$C_4$-Alkylbenzyl,

$R^4$ und $R^5$ unabhängig voneinander $C_1$-$C_4$-Alkyl, $C_1$-$C_4$-Halogenalkyl, $C_2$-$C_6$-Alkoxyalkyl oder Aralkyl mit 1-4 Kohlenstoffatomen im Alkylteil,

m eine Zahl von Null bis drei und

n eine Zahl von eins bis drei bedeuten.

2. Verbindungen gemäss Anspruch 1, dadurch gekennzeichnet, dass m die Zahl zwei bedeutet.

3. Verbindungen gemäss Anspruch 1, dadurch gekennzeichnet, dass X Trifluormethyl oder Chlor bedeutet.

4. Verbindungen gemäss Anspruch 1, dadurch gekennzeichnet, dass $R^1$ für Wasserstoff steht.

5. Verbindungen gemäss Anspruch 1, dadurch gekennzeichnet, dass $R^4$ $C_1$-$C_4$-Alkyl bedeutet.

6. Verbindungen gemäss Anspruch 1, dadurch gekennzeichnet, dass $R^5$ $C_1$-$C_4$-Alkyl bedeutet.

7. Verbindungen gemäss Anspruch 1, dadurch gekennzeichnet, dass Y die -CH= Gruppe und m die Zahl zwei bedeuten und die beiden Reste X für Chlor in 2-Stellung und Trifluormethyl in 4-Stellung stehen, $R^1$ Wasserstoff, $R^4$ und $R^5$ unabhängig voneinander $C_1$-$C_4$-Alkyl bedeuten.

8. Verbindungen gemäss Anspruch 1, dadurch gekennzeichnet, dass Y Stickstoff bedeutet, der Pyridinring in 2-Stellung veräthert ist, m die Zahl eins und X Trifluormethyl in 5-Stellung bedeuten, $R^1$ für Wasserstoff, $R^4$ und $R^5$ unabhängig voneinander für $C_1$-$C_4$-Alkyl stehen.

9. Verbindungen gemäss Anspruch 1, dadurch gekennzeichnet, dass sie der allgemeinen Formel Ia

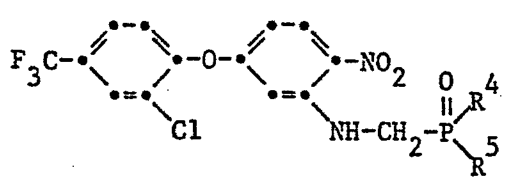

(Ia)

worin $R^4$ und $R^5$ unabhängig voneinander Methyl oder Aethyl bedeuten, entsprechen.

10. Verbindungen gemäss Anspruch 1, dadurch gekennzeichnet, dass sie der allgemeinen Formel Ib

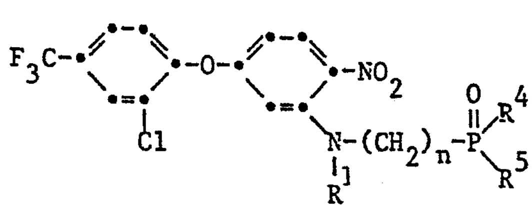

(Ib)

worin $R^1$ Wasserstoff, Methyl, Aethyl, Propyl oder Benzyl, $R^4$ und $R^5$ unabhängig voneinander $C_1$-$C_4$-Alkyl und n eine Zahl von 1 bis 3 bedeuten, entsprechen.

11. Verbindungen gemäss Anspruch 1, dadurch gekennzeichnet, dass sie der allgemeinen Formel Ic

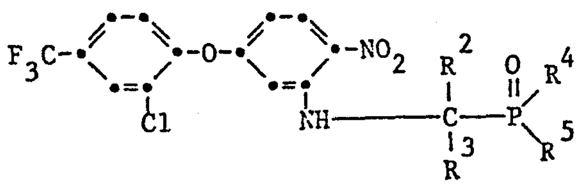 (Ic)

worin $R^2$ Methyl, $R^3$ Wasserstoff oder Methyl, $R^4$ und $R^5$ unabhängig voneinander Methyl oder Aethyl bedeuten, entsprechen.

12. N-[2-Nitro-5-(2-chlor-4-trifluormethylphenoxy)-phenyl]-P,P-dimethyl-aminomethylphosphinoxid gemäss Anspruch 1.

13. N-[2-Nitro-5-(5-trifluormethyl-2-pyridyloxy)-phenyl]-P,P-dimethyl-aminomethylphosphinoxid gemäss Anspruch 1.

14. N-[2-Nitro-5-(3,5-dichlor-2-pyridyloxy)-phenyl]-P,P- dimethyl-aminomethylphosphinoxid gemäss Anspruch 1.

15. N-[2-Nitro-5-(2-chlor-4-trifluormethylphenoxy)-phenyl]-P,P-diäthyl-aminomethylphosphinoxid gemäss Anspruch 1.

16. N-[2-Nitro-5-(2-chlor-4-trifluormethylphenoxy)-phenyl]-P,P-dimethyl-1- aminobutylphosphinoxid gemäss Anspruch 1.

17. N-[2-Nitro-5-(2-chlor-4-trifluormethylphenoxy)-phenyl]-P,P-dimethyl-1-aminoäthylphosphinoxid gemäss Anspruch 1.

18. N-[2-Nitro-5-(3-chlor-5- trifluormethyl-2-pyridyloxy)-phenyl]-P,P-dimethyl-1-aminoäthylphosphinoxid gemäss Anspruch 1.

19. N-[2-Nitro-5-(2-chlor-4-trifluormethylphenoxy)-phenyl]-P,P-dimethyl-1-amino-2-(3-methylphenyl)-äthylphosphinoxid gemäss Anspruch 1.

20. Verfahren zur Herstellung der Verbindungen der Formel I, dadurch gekennzeichnet, dass man einen Dinitrophenylaryläther der Formel II

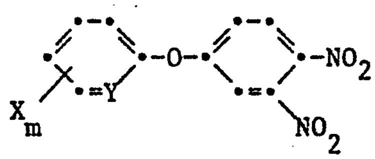

(II)

worin X, Y und m die unter Formel I gegebene Bedeutung haben, mit einem Aminoalkylphosphinoxid-Derivat der Formel III

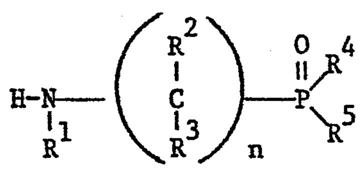

(III)

worin $R^1$, $R^2$, $R^3$, $R^4$, $R^5$ und n die unter Formel I gegebene Bedeutung haben, umsetzt.

21. Herbizides und pflanzenwuchsregulierendes Mittel, dadurch gekennzeichnet, dass es als aktive Komponente mindestens eine Verbindung der Formel I nach Anspruch 1 enthält.

22. Verfahren zur Bekämpfung von unerwünschtem Pflanzenwuchs oder zur Regulierung des Pflanzenwuchses, dadurch gekennzeichnet, dass man eine Verbindung der Formel I nach Anspruch 1 oder ein Mittel, welches eine Verbindung der Formel I enthält, auf Pflanzen, deren Standorte oder Pflanzenteile appliziert.

23. Verfahren nachAnspruch 22 zur Bekämpfung von Unkräutern in Kulturpflanzenbeständen.

24. Verfahren nach Anspruch 22 zur Bekämpfung von Unkräutern in Mais, Soja, Baumwolle, Reis und Getreidekulturen.

25. Verfahren nach Anspruch 24 zur Bekämpfung dikotyler Unkräuter.

26. Verfahren nach Anspruch 24 zur Bekämpfung von monokotylen Unkräutern in Reis.

27. Verfahren nach Anspruch 22 zur Förderung des Wurzelwachstums bei Getreidepflanzen.

FO 7.5 CW/mg*/rn*